# EUROPEAN PATENT APPLICATION

(11) **EP 4 152 301 A1**
(43) Date of publication of application: **22.03.2023**
(21) Application number: 21944230.8
(22) Date of filing: 05.08.2021
(51) Int. Cl.: G09F 3/02, B42D 25/435

(54) **LASER ENGRAVED SEAL**

(30) Priority: 01.06.2021 JP 2021092414
(71) Applicant: Euroke-Technoparts Co., Ltd., Kobe-shi Hyogo, 651-2129 (JP)
(72) Inventor: TAKENAKA Fukuyasu, Akashi-shi Hyogo 673-0001 (JP)
(74) Representative: Geskes, Christoph
(86) International application number: PCT/JP2021/029210
(87) International publication number: WO 2022/254737

(57) **Abstract**

A laser-engraved seal is provided with improved tamper-resistance, in which the laser-engraved seal includes a surface layer and an adhesive layer, wherein laser engraving on the seal is performed such that the applicable part of the surface layer is removed to form a background pattern, and an identification mark is formed inside the background pattern. The laser-engraved seal includes a surface layer having a first color serving as a release layer, and a base material layer having a second color including a base material or an adhesive layer serving as a base material, and the laser-engraved seal further includes a background pattern formed by removing part of the surface layer by laser engraving performed on the surface layer, and an identification mark formed as a recess inside the background pattern by removing part of the base material layer by laser engraving.

## Description

### Technical Field

The present invention relates to a laser-engraved seal, especially to a laser-engraved seal with enhanced tamper resistance. The laser-engraved seal includes a surface layer serving as a release layer, and an adhesive layer serving as a base material, wherein laser engraving to enhance tamper resistance is performed such that the applicable part of the surface layer is removed to form a background pattern, and an identification mark is formed inside the background pattern.

### Background Art

In equipment or vehicles that require high reliability, there is a risk of serious accidents if parts are replaced by low-quality imitations or if parts are tampered with. In vehicles including automobiles, unauthorized modification or use of inferior parts can lead to major accidents involving passengers, pedestrians, and other vehicles. If an accident occurs, unless it is clear that the accident was caused by an obvious operational error or unauthorized modification of the vehicle by a user, the manufacturer bears a great deal of responsibility for investigating the cause of the accident and taking measures to prevent accidents from recurring. Therefore, manufacturers of equipment and vehicles that require a high level of reliability have tried to make a product design to prevent products from being easily tampered with, or to easily detect tampering if tampering has been made.

One measure to prevent tampering is using tamper-evident seals that, once removed, cause partial destruction of the printed area and other parts to prevent them from being reapplied. If a tamper-evident seal with a unique product number, such as a serial number, is used, even if a genuine part is removed and replaced with an imitation part, the seal on the genuine part cannot be reapplied to the imitation part. However, if tamper-evident seals are counterfeited, it becomes impossible to easily distinguish genuine parts from counterfeit parts. In order to make tamper-evident seals more difficult to counterfeit, the seals that use laser engraving instead of character printing have been put to practical use in conventional tamper-evident seals.

Patent document 1 (Japanese Unexamined Patent Application Publication No. 2003-114621) discloses a label having a substrate layer and an adhesive layer, where the adhesive layer is a pressure-sensitive and/or hot-melt adhesive and a heat-activated adhesive, allowing the label to be adaptable to laser engraving, which makes the label to be difficult to be peeled off in a non-destructive manner. Patent Document 1 also discloses an example of making the adhesive layer conductive to prevent tampering with the warranty mark being exposed for measuring its tamper resistance using laser, and an example of preventing tampering by generating afterglow with laser irradiation by providing long afterglow pigments to the area where a laser beam is to be emitted.

However, the main obj ective of Patent Document 1 is to present how to configure the adhesive layer of the label, and there is no detailed description of how the laser is specifically emitted to form the imprint. Labels that use special materials tend to be expensive, and the increased cost of materials is a burden for manufacturers who produce large quantities of parts. In contrast, laser processing machines are evolving day by day, and simply engraving a unique product number such as a serial number on parts is not effective enough to prevent counterfeiting in view of the current laser technology. Accordingly, there is a need for a laser-engraved seal that is effective in preventing tampering without using specially formulated materials and that is adaptable to general-purpose seals that are suitable for laser engraving.

### Prior-art Document

### Patent Document

Patent Document 1: Japanese Unexamined Patent Application Publication No. 2003-114621

### Summary of Invention

### Technical Problem

The present invention was made in view of the problems with the conventional laser-engraved seals described in the preceding. It is an object of the present invention to provide a laser-engraved seal with improved tamper-resistance, in which the laser-engraved seal includes a surface layer serving as a release layer, and a base material, or an adhesive layer serving as a base material, wherein laser engraving on the seal is performed such that the applicable part of the surface layer is removed to form a background pattern, and an identification mark is formed inside the background pattern.

### Solution to Problem

The laser engraved seal according to the present invention made to achieve the previously mentioned object includes a surface layer having a first color serving as a release layer, and a base material layer having a second color including a base material or an adhesive layer serving as a base material. The laser engraved seal further includes a background pattern formed by removing part of the surface layer by laser engraving performed on the surface layer, and an identification mark formed as a recess inside the background pattern by removing part of the base material layer by laser engraving.

The background pattern preferably includes a surface including one or more first laser beam traces formed by one or more laser beam shots emitted with a constant or variable pitch along a plurality of parallel lines extending in a first direction with a constant or variable pitch, the pitch being smaller than the diameter of a laser beam shot used for the laser engraving, and one or more second laser beam traces formed by one or more laser beam shots emitted with a constant or variable pitch along a plurality of parallel lines extending in a second direction orthogonal to the first direction with a constant or variable pitch.

The color of the recess is preferably the same as the second color. A depth of the recess is preferably the depth from which information regarding engraving can be obtained from an image captured by an optical device including a camera by means of a difference or ratio of shadow density of the recess compared with that of the surroundings of the recess.

### Advantageous Effects of the Invention

The laser-engraved seal of the present invention includes a surface layer serving as a release layer having a first color, and an adhesive layer serving as a base material having a second color. The surface layer can be removed with laser irradiation to form a background pattern, and an identification mark composed of, for example, micro letters that cannot be seen visually can be engraved within the background pattern. This configuration of the present invention can provide a laser-engraved seal that is effective in preventing counterfeiting. This kind of a seal material having a release layer and an adhesive layer of different colors is adaptable to laser engraving, and therefore, there is no need to adopt special materials or layer configurations to manufacture a laser-engraved seal, so that the present invention can use relatively inexpensive seal materials.

Furthermore, the color of the identification mark formed inside the background pattern does not change from the original color and is the same as the color of the background pattern, so that the identification mark is inconspicuous while the mark resides inside the background pattern, which makes the mark to be hardly noticeable to a third party. Also, the depth of the identification mark is configured such that the difference in the shadow density between the identification mark and the area surrounding the identification mark can be identified in the image taken by a camera or other optical device, and the background pattern surrounding the identification mark is also configured to have a characteristic pattern, which is formed by laser irradiation emitted along multiple parallel lines extending in two orthogonal directions. Thus, the present invention can provide laser-engraved seals that cannot be easily counterfeited.

### Brief Description of Drawings

FIG. 1 is a schematic diagram that depicts the configuration of a laser-engraved seal according to an embodiment of the present invention.
FIG. 2 is a schematic diagram that illustrates a method of forming a background pattern of a laser-engraved seal according to an embodiment of the present invention.
FIG. 3 is a schematic diagram that illustrates a method of forming a background pattern of a laser-engraved seal according to an embodiment of the present invention.
FIG. 4 is a schematic diagram that illustrates a method of forming a background pattern of a laser-engraved seal according to another embodiment of the present invention.
FIG. 5 is a flowchart that illustrates a method of laser engraving to produce a laser-engraved seal according to an embodiment of the present invention.
FIG. 6 is a flowchart that illustrates a method of identifying the legitimacy of a laser-engraved seal according to an embodiment of the present invention.

### Description of the Embodiments

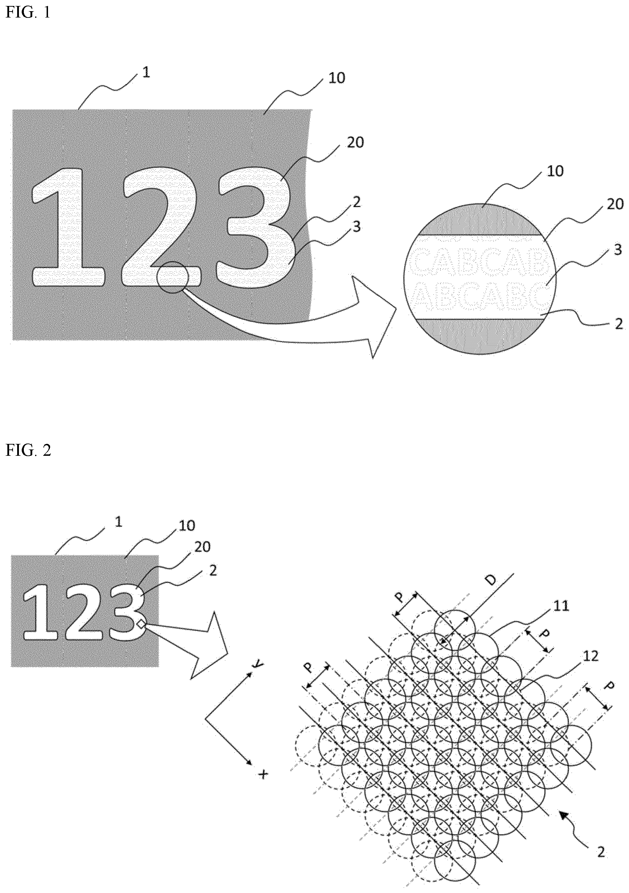

Next, the embodiments of a laser-engraved seal according to the present invention will be described in detail with reference to the drawings. FIG. 1 is a schematic diagram that depicts the configuration of a laser-engraved seal according to an embodiment of the present invention. Referring to FIG. 1, a laser-engraved seal 1 according to an embodiment of the present invention includes a surface layer 10 serving as a release layer having a first color, a background pattern 2 formed such that laser irradiation emitted on the surface layer 10 removes applicable part of the surface layer 10 to expose a base material layer 20, and an identification mark 3, which is a recessed part on the base material layer 20 formed such that laser irradiation is emitted on the base material layer 20 to remove a part thereof. The base material layer 20 constitutes the main body of the laser-engraved seal 1, the base material layer 20 including a base material, or an adhesive layer serving as a base material.

The laser-engraved seal 1 according to an embodiment of the present invention includes an identification mark 3 having a size that cannot be visually identified formed on the surface of the background pattern 2, the background pattern 2 being created as a meaningful shape such as a character or a logo by laser engraving. This makes the laser-engraved seal 1 not easily counterfeitable. The irradiation energy of the laser used to form the background pattern 2 and the identification mark 3 should be within the range where the base material layer 20 is not discolored. Because the soft laser is emitted on the surface layer 10 and the base material layer 20, the background pattern 2 and the identification mark 3 are formed in the same color. This makes the identification mark 3 formed inside the background pattern 2 to be less conspicuous than the background pattern 2.

Further, the laser-engraved seal 1 according to an embodiment of the present invention is formed by a particular irradiation method as described in the following with reference to Figure 2 when the background pattern 2 is formed by laser engraving. By using the method, the background pattern 2 is formed to have a specific surface condition, and the recessed part forming the identification mark 3 is set to have a depth such that the difference in or the ratio of the shadow density of the bottom of the recess compared with that of the surface of the background pattern 2 is a given. With such a depth, a photograph of the laser-engraved seal 1 taken with a camera allows one to identify whether the laser-engraved seal is legitimate or not through examination of the difference in the shadow density between the bottom of the recess and the surface of the background pattern 2, or the ratio of the shadow density of the former to the latter. Even if a third party precisely observes a legitimate laser-engraved seal 1 in an enlarged image to reproduce the identification mark 3 for counterfeiting the laser-engraved seal 1, it would be impossible for the third party to reproduce the difference in the shadow density between the bottom of the recess and the surface of the background pattern 2, or the ratio of the shadow density of the former to the latter.

Thus, the laser-engraved seal 1 according to an embodiment of the present invention is effective in resisting counterfeiting. The laser-engraved seal 1 is applied to products that are required to be of high quality in use. If the base material layer consists of an adhesive layer serving as a base material, the adhesive layer is attached to an object, to which the seal 1 is to be applied. If the base material layer 20 does not include an adhesive layer and consists of only a base material, the laser-engraved seal 1 is applied to an object using an adhesive layer provided to the laser-engraved seal 1 separately from the base material layer 20.

FIG. 2 is a schematic diagram that illustrates the method of forming a background pattern of a laser-engraved seal according to an embodiment of the present invention. Referring to FIG. 2, the state where the applicable part of a surface layer 10 has been removed from the laser-engraved seal 1 to form the background pattern 2 is shown on the left side. The method of forming the exposed surface of the base material layer 20, which forms the background pattern 2, is shown in an enlarged manner on the right side.

In removing the surface layer 10 of the laser-engraved seal 1 according to an embodiment of the present invention, a laser beam shot having a diameter of D is used, which is intermittently emitted to different points of the surface layer 10, to remove the surface layer 10 within the background pattern 2.

To remove the surface layer 10 according to an embodiment of the present invention, the laser beam shot having a diameter D is emitted to the surface layer 10 along solid parallel lines extending in the first direction x at a constant or variable pitch (width) P, which is smaller than the laser beam diameter D. The parallel lines here are not actually drawn on the surface layer 10 of the seal subject to laser engraving, but are virtual lines used to designate the position to which laser irradiation is emitted. The laser irradiation is also emitted along a line of the parallel lines at a constant or variable pitch P. Thus, the laser beam is emitted such that first laser beam traces 11 are arranged in an array as shown by the solid circles. If the pitch P is made, for example, 1/√2 times smaller than the diameter D of a laser beam shot, all the surface layer 10 within the background pattern 2 can be removed. However, if the pitch P is made 1/√2 times larger than the diameter D, and the laser beam is emitted in an array shown in FIG. 2, the area of the surface layer 10 surrounded by the four of the first laser beam traces 11 remains.

In an embodiment, after the first laser irradiation is performed in the aforementioned manner, the second laser irradiation is performed such that the shots of the laser beam are emitted to the surface layer 10 along dashed parallel lines extending in the second direction y orthogonal to the first direction x, the shot being emitted at a constant or variable pitch P, which is smaller than the beam shot diameter D. The parallel lines, in this case, are also virtual lines to designate the position to which each shot of the laser beam is emitted. The shots of the laser beam along the second direction y form an array of second laser beam traces 12 shown by the dashed circles. In the example of FIG. 2, the shots of the second laser beam are configured to be emitted to the areas remaining after the shots of the first laser beam have been emitted, whereby the shots of the two laser beams can remove all the portion of the surface layer 10 within the background pattern 2.

The two-times laser irradiation for forming the background pattern 2 is performed not only to remove all the portion of the surface layer 10 within the background pattern 2, but also to make the surface of the background pattern 2 to be flattened to be smooth. The two-times laser irradiation allows the exposed surface of the base material layer 20 within the background pattern 2 to have a specific surface shape in which laser beam traces overlap with each other. The surface of the base material layer 20 serves as a standard for determining the difference in or ratio of the shadow density of the surface the layer 2 compared with that of the recessed part of the identification mark 3. In one embodiment, the pitch P is 50-60 µm while the shot diameter D of the laser beam is 65-100 µm.

The exposed surface of the base material layer 20 within the background pattern 2 has different states of finish depending on the shot diameter D of the laser beam and the pitch P of the laser irradiation and the parallel lines. Accordingly, as needed, for example, the shot diameter D of the laser beam may be changed between the first and second laser irradiation, so that the size of the first laser beam traces 11 differs from that of the second laser beam traces 12. Also, the pitch P of the laser irradiation in the first and second irradiation may be changed, and furthermore, the pitch P of the parallel lines is partially changed in the first or second laser irradiation. The settings of the shot diameter D of the laser beam and the pitch P may be changed according to delivery destinations of the laser-engraved seal 1, whereby the state of finish of the exposed surface of the base material layer 20 within the background pattern 2, which serves as a standard for determining the difference in or ratio of the shadow density, may be changed to make counterfeiting of the laser-engraved seal 1 more difficult.

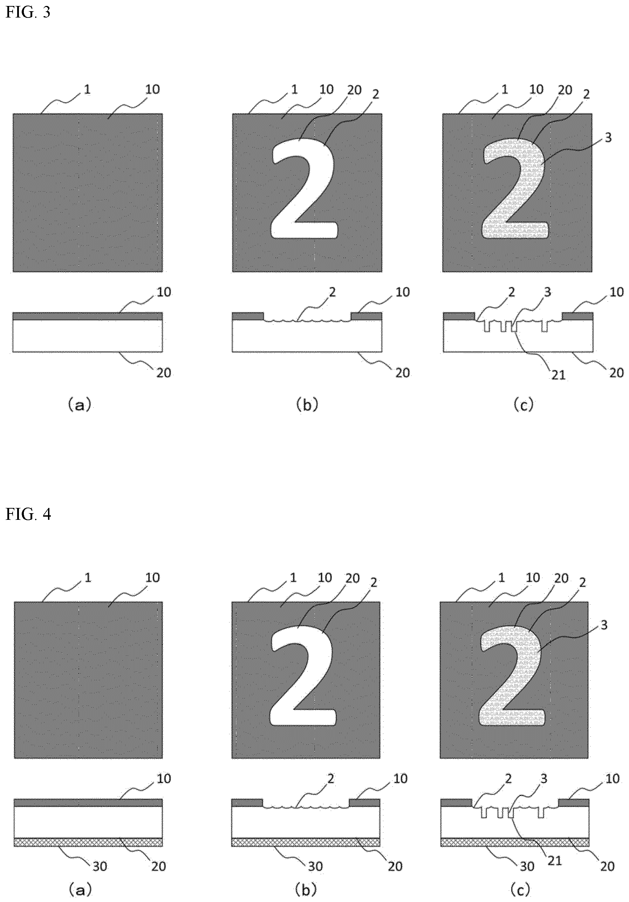

FIG. 3 is a schematic diagram that illustrates a method of forming a background pattern of a laser-engraved seal according to an embodiment of the present invention. FIG. 3(a) shows a plan view and a sectional view of the material of the seal, FIG. 3(b) shows a plan view and a schematic sectional view of the material of the seal, in which the background pattern 2 is formed such that the applicable part of the surface layer 10 is removed from the base material by laser irradiation, and FIG. 3(c) shows a plan view and a schematic sectional view of the material of the seal, in which an identification mark 3 is formed inside the background pattern 2.

Referring to FIG. 3, the material of the seal has a two-layer structure consisting of a surface layer 10 serving as a release layer having a first color, and a base material layer 20 consisting of an adhesive layer having a second color and serving as a base material. There are no restrictions on the material of the seal if the material is suitable for laser engraving. In the case of the material of the seal having a two-layer structure, the surface layer 10 is preferably configured to be burnt off easily while being irradiated with laser beam, so that resin material such as varnish is preferably used, wherein a coloring material such as pigment is preferably added to the resin material. An acrylic base material with relatively high heat resistance is preferably used for the base material layer 20. Furthermore, in the case of a laser-engraved seal 1 to be applied to an object such as a vehicle, which requires particularly high-quality parts, the material layer 20 is preferably a resin that is configured to be broken if the seal is forcibly peeled off from the object to which the seal is applied.

As described in FIG. 2, laser irradiation is performed along two orthogonal directions to remove the surface layer 10, and to make the exposed surface of the base material layer 20 smooth, whereby the background pattern 2 as shown in FIG. 3(b) is formed. The background pattern 2 is formed in a size that can be visually identified, such that the pattern 2 shows the manufacturing number of an object, or a logo of the manufacturer of an object, to which the laser-engraved seal 1 is applied. The background pattern 2 may have a shape that presents no specific meaning unlike the aforementioned, which only works to authenticate the object to which the laser-engraved seal 1 is applied with the identification mark 3 to be formed inside the background pattern 2. Because the laser engraving of the present invention does not require a laser with energy high enough to burn through the base material layer 20, the color of the background pattern 2 remains the same as that of the base material layer 20.

Next, as shown in FIG. 3(c), an identification mark 3 consisting of a recess 21 is further formed inside the background pattern 2 by laser engraving. The depth of the recess 21 should be determined such that the engraved pattern formed as the identification mark 3 can be distinguished in the image taken by a camera or other optical device by means of the difference in or ratio of the shadow density of the identification mark 3 compared with that of the background pattern 2 surrounding the identification mark 3. The appropriate range of the depth of the recess 21 can be determined such that recesses 21 that have different depths are formed inside the background pattern 2 in advance, and the background pattern 2 and the recesses 21 are photographed by a camera or other means to examine the variations of the shadow density in the recesses 21 and the background pattern 2. Basically, as the depth of the recess 21 deepens, the image of the recess 21 darkens because the light at the time of photography is less likely to reach the bottom of the recess 21. The depth of the recess 21 is preferably selected from a range of depths, in which the difference in or ratio of the shadow density of the identification mark 3 compared with that of the background pattern 2 is stably provided.

The identification mark 3 may be formed inside all the characters of the formed background pattern 2 as shown in FIG. 1, or may be formed within a specific character of the formed background pattern 2 as shown in FIG. 3(c), or may be formed in a specific area within a specific character of the formed background pattern 2. Also, in FIG. 3(c), the letters "ABC" are repeatedly arranged to form the identification mark 3 inside the background pattern 2, but, for example, the letters "ACB," whose order of the letters is different from the order of "ABC," may be used. In addition, considering the fact that as the depth of the recess 21 deepens, the difference in or the ratio of the shadow density of the identification mark 3 compared with that of the background pattern 2 is likely to increase, the depth of the recess 21 of the identification mark 3 may be changed character by character, which forms the background pattern 2, or recess by recess, which forms the identification mark 3 inside the background pattern 2, to diversify the configuration of the identification mark 3.

Thus, various variants of the identification mark 3 can be created such that the location where the identification mark is formed is varied, the array of the letters forming the identification mark 3 is changed, or the depth of the recess 21 is altered. Such various variants allow different identification marks 3 to be prepared depending on different delivery destinations of the laser-engraved seal 1, or depending on different production lots in the same delivery destination. Providing a variety of configurations of the identification mark 3 makes it difficult to counterfeit the laser-engraved seal 1.

FIG. 4 is a schematic diagram that illustrates a method of forming a background pattern of a laser-engraved seal according to another embodiment of the present invention. Similar to FIG. 3, FIG. 4(a) shows a plan view and a sectional view of the material of the seal, FIG. 4(b) shows a plan view and a schematic sectional view of the material of the seal, in which a background pattern 2 is formed such that the appliable part of a surface layer 10 is removed with laser irradiation, and FIG. 4(c) shows a plan view and a schematic sectional view of the material of the seal, in which an identification mark 3 is formed within the background pattern 2.

Unlike the two-layer structure as shown in FIG. 3, FIG. 4 shows a three-layer structure, which consists of a surface layer 10 serving as a release layer having a first color, a base material layer 20 composed of base material having a second color, and an adhesive layer composed of adhesive. The adhesive layer 30 is provided to apply the laser-engraved seal 1 to an object. Because the layer 30 does not contribute to identifying the pattern and mark formed by laser engraving, the color of the adhesive layer 30 is not particularly relevant. However, if the second color of the base material layer 20 is light and close to transparency, the color of the adhesive layer 30 may show through after the surface layer 10 has been removed. In such a case, the color of the adhesive layer 30 is preferably configured to be different from the first color of the surface layer 10.

Similar to the embodiment shown in FIG. 3, also in the embodiment shown in FIG. 4, laser irradiation is performed in two orthogonal directions, by which the applicable part of the surface layer 10 is removed, and the exposed surface of the base material layer 20 is made smooth to form a background pattern 2, and an identification mark 3 composed of recesses 21 is formed inside the background pattern 2. The variants similar to the embodiment shown in FIG. 3 also can be provided in the embodiment shown in FIG. 4, in which the base material layer 20 is made thicker than the depth of the recess 21.

The structure of the laser-engraved seal 1 according to the embodiment of the invention is not limited to the two-layer structure shown in FIG. 3 and the three-layer structure shown in FIG. 4. If the seal 1 includes a surface layer 10, a base material layer 20, and an adhesive layer 30, which is to be provided on the opposite side of the surface layer 10, the seal 1 may include one or more other functional layers between the base material layer 20 and the adhesive layer 30.

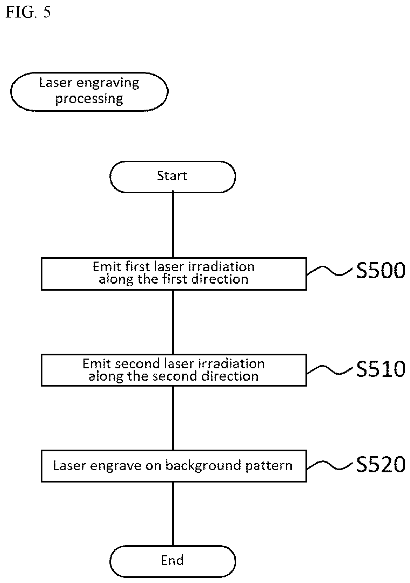

FIG. 5 is a flowchart that illustrates a method of laser engraving to produce a laser-engraved seal according to an embodiment of the present invention. Referring to FIG. 5, in step S500, the first laser beam is emitted intermittently to a surface layer 10 of the material of the seal for laser engraving, which includes the surface layer 10 and a base material layer 20, with a pitch P along virtual parallel lines extending in the first direction x. The pitch P may be the same as or different from a pitch P of spacing between the parallel lines. After the first laser beam has been emitted, part of the surface layer 10 is removed, so that first laser beam traces 11 exposed on the base material layer 20 are arranged in a grid or near-grid-like array.

Next, in step S510, a second laser beam is emitted also to the surface layer 10 intermittently with a pitch P along virtual parallel lines extending in the second direction y orthogonal to the first direction x. The pitch P of the laser irradiation may also be the same as or different from the pitch P of the spacing between the virtual parallel lines extending in the second direction y. After the second laser beam has been emitted, the applicable part of the surface layer 10 is removed, so that second laser beam traces 12 exposed on the base material layer 20 are arranged in a grid or near-grid-like array.

The first and second laser beams are emitted such that the positions of the first laser beam traces 11 do not match those of the second laser beam traces 12, so that all the inside of the background pattern 2 to which a laser beam is emitted is covered with the first laser beam traces 11 and the second laser beam traces 12. In this case, the pitch P of the laser beam and shot diameter D of the laser beam are adjusted so that no part of the surface layer 10 remains inside the background pattern 2. Since the first and second laser beams are emitted such that the positions of the first laser beam traces 11 do not match those of the second laser beam traces 12, the outer edge of the first laser beam traces 11 is smoothed by the overlapped second laser beam traces 12.

In step S520, an identification mark 3 is formed by laser engraving inside the background pattern 2, which has been formed by the first laser irradiation and second laser irradiation. The identification mark 3 is formed such that part of the base material layer 20 is removed with laser irradiation to form recesses 21 on the base material layer 20. As with the first and second laser irradiations, the energy of the laser irradiation at this time is also set to be low, so that the base material layer 20 is not burnt while it is irradiated with a laser beam. As a result, the color of the background pattern 2 and the identification mark 3 holds the color of the base material layer 20. The identification mark 3 is formed in a size that cannot be visually identified in shapes such as letters or other specific patterns. The identification mark 3 is visually invisible because the color of the mark 3 is the same as that of the base material layer 20, which provides a background color, and therefore it is not apparent at first glance that the identification mark 3 is embedded within the background pattern 2. However, the identification mark 3 composed of the recesses 21 can be identified in an enlarged image because the shadow density of the identification mark 3 differs from that of the background pattern 2.

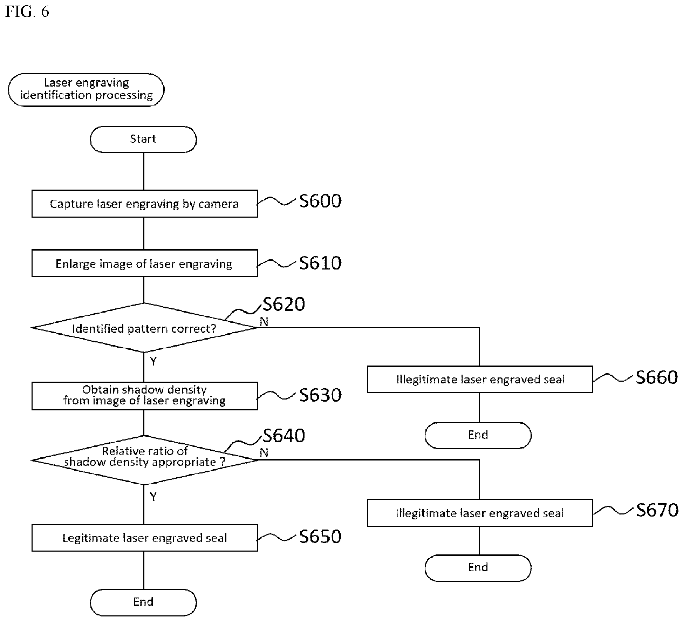

FIG. 6 is a flowchart that illustrates a method of identifying the legitimacy of a laser-engraved seal according to an embodiment of the invention. Referring to FIG. 6, in step S600, a camera is used to capture laser engraving presented as a background pattern 2 of a laser-engraved seal 1 according to an embodiment of the present invention. The camera is not limited to a regular camera, but can be a camera provided to a smartphone, a tablet, or other devices. However, the camera must be provided with pixels and resolution enough that the identification mark 3 inside the background pattern 2 is recognizable when the image of the background pattern 2 is enlarged.

In step S610, the image of laser engraving that has been captured is displayed on a display device in an enlarged state. To display captured images, smartphones or tablets are suitable because they allow the captured images to be displayed on the spot, and allow the portion of interest of the image to be easily magnified. If the identification mark 3 is provided to a specific portion within the background pattern 2, a user who wants to check the legitimacy of a laser-engraved seal 1 only has to enlarge the portion of interest of the image to the size that allows the identification mark 3 to be recognized.

Since in step S610 a user becomes able to check the contents of the identification mark 3 visually, in step S620, the user determines whether the identification mark 3 created by laser engraving matches the contents to be originally engraved. For example, in the embodiment shown in FIG. 3, the letters "ABC" are repeatedly arranged as the identification mark 3 inside the background pattern 2. If the image that has been captured and enlarged does not contain the letters "ABC," or if the "C" is missing and only the "AB" is shown in the letters, in step S660, that laser-engraved seal 1 is determined to be fraudulent. In addition, the font, size, or spacing of the characters of the identification mark 3 may be used to determine whether the laser-engraved seal 1 is legitimate.

If the identification mark 3 matches the contents to be originally engraved, in step S630, the data of the shadow density made by laser engraving is obtained. The shadow density to be obtained is, for example, that of the bottom of the recess 21 of the identification mark 3 and that of the background pattern 2 surrounding the identification mark 3 so that the difference in the shadow density between the former and the latter can be examined. The manufacturer of a laser-engraved seal 1 may provide an application running on a smartphone or tablet, which can recognize in a captured image the boundary that separates the inside of a recess 21 from the outside thereof to compare the brightness of the inside of the recess 21 with that of the outside thereof.

Based on the data of the shadow density obtained in step S630, in step S640, it is determined whether the difference in or the ratio of the shadow density of the background pattern 2 compared with that of the identification mark 3 matches the initial setting. If the lighting conditions are constant when photographing the laser engraving, the difference in the shadow density between the background pattern 2 and the identification mark 3 may be used. Whether or not the laser-engraved seal 1 is legitimate may be determined by examining whether the difference falls within the range assumed when the pattern 2 and the mark 3 were created. However, if the lighting conditions may vary when photographing the laser engraving, because the difference in shadow density varies depending on the lighting conditions, the ratio of the shadow density of the background pattern 2 compared with that of the identification mark 3 is preferably used to determine whether or not the laser-engraved seal 1 is legitimate.

Whether or not the laser-engraved seal 1 is legitimate can be determined by whether or not the ratio of the brightness of the recess 21 to that of the background pattern 2 falls within the assumed range of values. In the captured image of laser engraving, in the case that a laser-engraved seal 1 contains an identification mark 3 in which the depth of the recess 21 is configured such that, for example, the brightness of the identification mark 3 is 1/2 to 1/3 of the brightness of the background pattern 2, if the brightness of the identification mark 3 obtained from the captured image in the laser-engraved seal 1 to be examined is not 1/2 to 1/3 of the brightness of the background pattern 2, this laser-engraved seal 1 to be examined is determined to be illegitimate (in step S670). Conversely, if the obtained brightness of the dentification mark 3 is 1/2 to 1/3 of the brightness of the background pattern 2, the background pattern 1 to be examined is determined to be legitimate in step S650.

In the laser-engraved seal 1 according to an embodiment of the present invention, if a seal material adaptable to laser engraving is used, because it is possible to form an identification mark 3 inside the background pattern 2 such that the mark 3 cannot be seen visually, and the mark 3 has the same color as the surrounding area, the present invention can provide a laser-engraved seal 1 that is effective in resisting counterfeiting without being restricted by the properties of the seal material. The surface of the background pattern 2, which is also the exposed surface of the base material layer 20, can be varied as appropriate by changing the shot diameter D of the laser beam, and the pitch P of the laser beam or the parallel lines during laser irradiation, which can provide variants of seal 1, and also varying the depth of the recesses 21 of the identification mark 3 can provide various variants of seal 1, so that the laser-engraved seal 1 according to the embodiment of the present invention cannot be easily counterfeited.

While particular embodiments of the present invention have been shown and described with reference to the drawings, it will be appreciated by those skilled in the art that changes and modifications may be made thereto without departing from the invention in its broader aspects.

### Description of Reference Numerals

- 1.: laser-engraved seal
- 2.: background pattern
- 3.: identification mark
- 10.: surface layer (release layer)
- 11.: first laser beam trace
- 12.: second laser beam trace
- 20.: base material layer
- 21.: recess
- 30.: adhesive layer

## Claims

1. A laser-engraved seal comprising: a surface layer having a first color serving as a release layer; and a base material layer having a second color comprising a base material or an adhesive layer serving as a base material;
the seal further comprising: a background pattern formed by removing part of the surface layer by laser engraving performed on the surface layer; and
an identification mark formed as a recess inside the background pattern by removing part of the base material layer by laser engraving.

2. The laser-engraved seal according to claim 1, wherein the background pattern comprises a surface comprising one or more first laser beam traces formed by one or more laser beam shots emitted with a constant or variable pitch along a plurality of parallel lines extending in a first direction with a constant or variable pitch, the pitch being smaller than the diameter of a laser beam shot used for the laser engraving, and one or more second laser beam traces formed by one or more laser beam shots emitted with a constant or variable pitch along a plurality of parallel lines extending in a second direction orthogonal to the first direction with a constant or variable pitch.

3. The laser-engraved seal according to any one of the preceding claims, wherein the color of the recess is the same as the second color.

4. The laser-engraved seal according to claim 3, wherein a depth of the recess is configured to be the depth that allows information regarding engraving to be obtained from an image captured by an optical device including a camera by means of a difference in or ratio of shadow density of the recess compared with shadow density of the surroundings thereof.

## Amended claims

### Amended claims under Art. 19.1 PCT

1. (Amended) A laser-engraved seal comprising: a surface layer with a first color serving as a release layer; and a base material layer with a second color comprising a base material or an adhesive layer serving as a base material;
the seal further comprising: a background pattern formed by removing the surface layer to expose the base material layer by laser engraving performed on the surface layer; and
an identification mark formed as a recess inside the background pattern by removing part of the base material layer by laser engraving, the thickness of the part to be removed being made thinner than the thickness of the base material layer.

2. The laser-engraved seal according to claim 1, wherein the background pattern comprises a surface comprising one or more first laser beam traces formed by one or more laser beam shots emitted with a constant or variable pitch along a plurality of parallel lines extending in a first direction with a constant or variable pitch, the pitch being smaller than the diameter of a laser beam shot used for the laser engraving, and one or more second laser beam traces formed by one or more laser beam shots emitted with a constant or variable pitch along a plurality of parallel lines extending in a second direction orthogonal to the first direction with a constant or variable pitch.

3. The laser-engraved seal according to any one of the preceding claims, wherein the color of the recess is the same as the second color.

4. The laser-engraved seal according to claim 3, wherein a depth of the recess is configured to be the depth that allows information regarding engraving to be obtained from an image captured by an optical device including a camera by means of a difference in or ratio of shadow density of the recess compared with shadow density of the surroundings thereof.
